# FASCICULE DE BREVET EUROPEEN

(11) **EP 1 998 145 B1**
(45) Date de publication et mention de la délivrance du brevet: **27.03.2019**
(21) Numéro de dépôt: 08290493.9
(22) Date de dépôt: 28.05.2008
(51) Int. Cl.: G01D 1/04, G01D 5/04, G06M 1/04, G01B 5/30

(54) **Microcapteur apte à detecter une variation de distance ou un cycle de variations de distance entre deux points ou zone d'une structure lors d'une sollicitation**
Mikrosensor zum Erfassen einer Entfernungsänderung oder eines Zyklus von Entfernungsänderungen zwischen zwei Punkten oder Zonen einer Struktur bei Belastung
Microsensor capable of detecting a distance change or a series of distance changes between two points or zones of a structure when placed under stress

(30) Priorité: 29.05.2007 FR 0703754
(43) Date de publication de la demande: 03.12.2008
(73) Titulaire: Etat français représenté par le Délégué Général pour l'Armement, 75509 Paris Cedex 15 (FR)
(72) Inventeur: Louvigné, Pierre-François, 92330 Sceaux (FR); Minotti, Patrice, 25660 Gennes (FR); Joseph, Eric, 25170 Chaucenne (FR); Hélin, Philippe, 25000 Besancon (FR); Walter, Vincent, 25000 Besancon (FR); Vescovo, Paul, 25000 Besancon (FR)

(56) Documents cités:
- FR-A- 2 890 748
- FR-A- 2 893 139
- US-A- 5 452 335
- US-B1- 6 617 963

## Description

La présente invention concerne le domaine des microcapteurs et a plus particulièrement pour objet un microcapteur apte à détecter et, préférentiellement aussi à compter, le nombre de cycles de variations de distance entre deux points ou zones d'une structure soumise à une action extérieure répétée, par exemple des cycles de températures ou de contraintes mécaniques comme par exemple le nombre de passages de véhicules sur un pont, générant un niveau de contrainte connu dans la structure.

Dans le domaine des infrastructures routières, telle par exemple qu'un pont, il est important de connaître le nombre de véhicules l'ayant franchi afin d'en déterminer l'évolution structurelle.

A ce titre, on connaît le brevet FR2875324 qui décrit un compteur de passage de véhicules comportant principalement un microphone disposé dans une cavité acoustique et connecté à des moyens de traitement des signaux émis par le microphone. Le signal caractéristique d'un véhicule à moteur est ainsi détecté par un tel dispositif.

On connaît aussi d'autres dispositifs fonctionnant à l'aide d'ultrasons, de capteurs de pression ou de capteurs d'images et auxquels sont associés des moyens de traitement.

Ces dispositifs présentent plusieurs inconvénients.

Le premier d'entre eux concerne leur durée de vie : elle est limitée, au plus, à la durée de vie des moyens d'alimentation, à savoir des piles, soit environ un ou deux ans.

Le second d'entre eux concerne l'impossibilité de les utiliser en complète sécurité pyrotechnique. En effet, la présence d'une différence de potentiel et donc d'un courant électrique génère un risque de formation d'étincelle ou de court-circuit pouvant engendrer un incendie voire une explosion en présence de matières détonantes.

Le troisième d'entre eux concerne leur sensibilité aux champs magnétiques à cause, notamment, de la génération de courants induits dans les circuits électriques et de la dégradation des composants électroniques qui en résulte.

De plus, ces capteurs et les moyens de traitement associés sont de grande taille, typiquement de plusieurs dizaines de centimètres ce qui les rend très visibles et explique qu'ils sont l'objet d'actes de vandalisme.

Le but de l'invention est de résoudre ces inconvénients en proposant un dispositif de comptage du nombre de cycles de sollicitations subis par une structure pouvant par exemple correspondre au nombre de cycles de température, de sollicitations mécaniques en traction, compression et/ou flexion engendré, par exemple, par le passages de mobiles sur cette structure dont, avantageusement, la taille n'excède pas 5 cm pour sa plus grande dimension, et préférablement 2 cm, et présentant une durée de vie quasiment illimitée, pouvant être utilisé en sécurité pyrotechnique, ne présentant aucune sensibilité aux champs électromagnétiques et qui permette un comptage sans erreur de ce nombre de cycles ou de passages.

La solution apportée est, selon une première caractéristique, Capteur passif et réversible de déformations selon une direction OX d'une structure notamment lors de cycles de températures ou de contraintes mécaniques subis par cette structure, ce capteur comportant des moyens de détection et des moyens de comptage, caractérisé en ce qu'il comporte des moyens de détection et de comptage des cycles de variations de distance entre deux points ou zones d'une structure, ces moyens comportant un support possédant une première et une seconde partie possédant chacune une zone d'ancrage, ces zones d'ancrage étant aptes à être fixées respectivement à l'une et à l'autre desdits deux points ou zones de la structure et étant constituées par des plots, des encoches et/ou des alésages et étant de dimensions plus faibles que celles des première et seconde parties, les moyens de comptage étant associés à chacune des dites première et seconde parties du support, les première et seconde parties du support étant reliées entre-elles par au moins un élément élastique.

Par réversible, il faut entendre un capteur apte à détecter un cycle de variations de distance sans se détériorer, donc apte ensuite à détecter un autre cycle.

Par moyens passifs, il faut comprendre des moyens fonctionnant sans source d'énergie contrairement aux moyens, dits actifs, utilisés dans les demandes de brevets susmentionnées et qui utilisent une source d'énergie, à savoir une alimentation électrique.

Selon une caractéristique particulière, les plots, les encoches et/ou les alésages ont, selon ladite direction OX, des dimensions plus faibles que celles des première et seconde parties.

Selon une autre caractéristique, ce capteur est un microcapteur

Selon une caractéristique avantageuse, un capteur selon l'invention comporte au moins l'une des caractéristiques suivantes :
les première et seconde parties du support sont reliées entre-elles par une troisième partie intermédiaire en forme de U,
les moyens de détection et de comptage comportent des moyens mécaniques de comptage possédant au moins une première roue dentée.

Selon une caractéristique particulière, cette première roue dentée est disposée sur un premier support ou sur une première partie d'un support et au moins une poutre d'entraînement est solidaire, à l'une de ses extrémités à un deuxième support ou à une deuxième partie dudit support et comporte, à son autre extrémité, au moins une dent apte à s'engrener sur ladite première roue dentée.

Selon une autre caractéristique, un microcapteur selon l'invention comporte un dispositif anti-retour associé à ladite première roue dentée, ce dispositif étant constitué par une poutre solidaire, à l'une de ses extrémités, du premier support ou de la première partie du support et comportant, à son autre extrémité, au moins une dent apte à s'engrener sur ladite première roue dentée ou en des lames coopérant avec une surface périphérique interne de la première roue dentée.

Selon une autre caractéristique le dispositif anti-retour comporte une dent apte à s'engrener sur ladite première roue dentée, cette dent ainsi que celle de la poutre d'entraînement et celles de ladite roue dentée comportant chacune une surface radiale et une surface inclinée reliant l'extrémités de la surface radiale de cette dent à la base de la surface radiale de la dent suivante.

Selon une caractéristique particulière, un microcapteur passif de détection et de comptage comporte un support, principalement en forme de U comportant ainsi une première partie et une deuxième partie reliées par une troisième partie constituant la base du U, et des moyens de comptage disposés sur le support et comportant au moins une première roue dentée disposée sur l'une des première ou deuxième parties et, d'une part, une poutre d'entraînement de cette roue dentée fixée, à l'une de ses extrémités, à l'autre des première ou deuxième parties et comportant, à son autre extrémité, une dent apte à constituer un engrenage avec les dents de la première roue dentée, et d'autre part, un dispositif anti-retour de la première roue dentée et de telle sorte que le rapprochement des première et seconde parties produit un entraînement de la roue dentée par la dent de la poutre d'entraînement tandis que l'éloignement de ces deux parties produit un maintien de la roue dentée par le dispositif anti-retour et un escamotage de la dent de la poutre d'entraînement sur une dent de la première roue dentée.

Selon une autre caractéristique, un microcapteur selon l'invention comporte des moyens aptes à limiter le déplacement de la poutre d'entraînement, par exemple constitués par des butées.

D'autres avantages et caractéristiques de l'invention apparaîtront dans la description de plusieurs variantes de réalisation de l'invention et au regard des figures annexées parmi lesquelles :
la figure 1 présente un schéma de l'une des deux faces principales du support d'un microcapteur selon une première variante de réalisation de l'invention,
la figure 2 montre un schéma de l'autre face principale du support d'un microcapteur ainsi que des moyens de comptage selon cette variante de réalisation,
la figure 3 présente un schéma simplifié d'une coupe selon le plan AA' de la figure 1 ,
la figure 4 montre plus précisément les moyens de comptage dans ce mode de réalisation de l'invention,
La figure 5 présente les déformations subies par un capteur selon ce mode de réalisation de l'invention lorsque la structure, sur laquelle il est fixé, est soumise à une sollicitation,
La figure 6 montre plus particulièrement des moyens de comptage selon un deuxième mode de réalisation de l'invention,
La figure 7 présente un schéma explicitant le mode de fonctionnement de ce second mode de réalisation de l'invention,
la figure 8 présente un schéma de l'une des deux faces principales du support d'un microcapteur selon une troisième variante de réalisation de l'invention,
la figure 9 montre un schéma de l'autre face principale du support d'un microcapteur ainsi que des moyens de comptage selon cette variante de réalisation,
la figure 10 présente un schéma simplifié d'une partie des moyens de comptage et d'un dispositif anti-retour et comportant notamment une première roue de comptage,
la figure 11 montre un schéma du support selon la figure 2 mais sans les moyens de comptage,
La figure 12 présente un schéma de la partie intermédiaire de la poutre d'entraînement,
la figure 13 montre un schéma d'une seconde roue de comptage des moyens de comptage,
La figure 14 présente un schéma des moyens de numérotation d'une première roue de comptage dans le cadre de cette variante de réalisation,
Les figures 15a et 15b montrent un schéma des moyens de numérotation d'une seconde roue de comptage dans le cadre de cette variante de réalisation,
La figure 16 présente un exemple de positionnement d'un microcapteur selon cette variante de réalisation sur une structure apte à fléchir,
Les figures 17a et 17b présentent le principe de fonctionnement du microcapteur selon l'invention,
Les figures 18a à 18e montrent des schémas de différents positionnements successifs des dents d'entraînement et anti-retour par rapport à celles de la première roue de comptage lors de la détection du passage d'un véhicule sur la structure fléchie,
la figure 19 présente un schéma de l'une des deux faces principales du support d'un microcapteur selon une quatrième variante de réalisation de l'invention,
la figure 20 présente les moyens de détection et de comptage selon cette variante de réalisation de l'invention,
la figure 21 présente les moyens de comptage selon cette variante de réalisation de l'invention,
La figure 22 montre une variante de réalisation d'une partie d'un microcapteur selon la figure 19 .

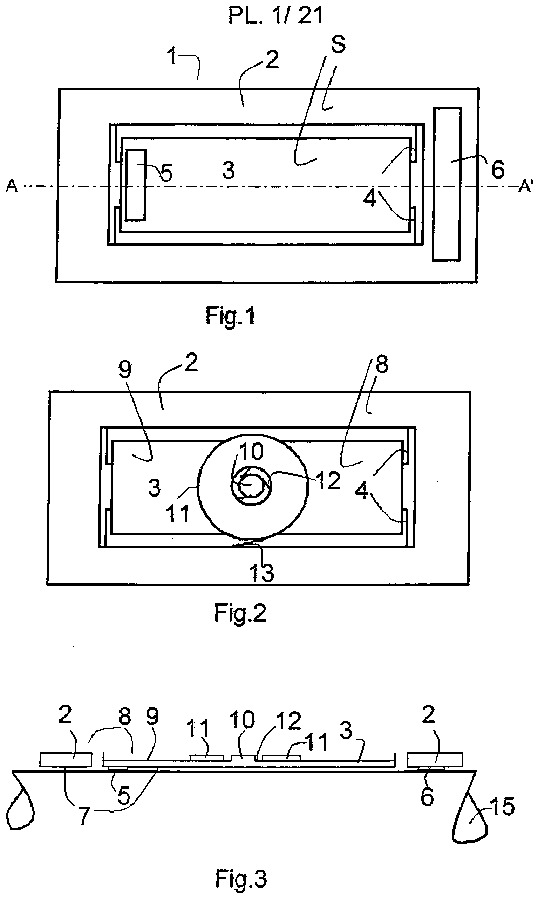

Les figures 1 à 3 montrent un capteur selon un mode de réalisation et, respectivement, la face inférieure 7, la face supérieure 8 et une vue selon la coupe AA' de la figure 1 .

Ce capteur 1 comporte un support S comportant une première partie 2 en forme de cadre et sur laquelle est fixé un premier plot 6 destiné à être fixé sur une structure 15 soumise à des cycles de déformations notamment en traction, en compression ou en flexion par exemple dues à une sollicitation mécanique et/ou thermique.

Le support S comporte aussi une seconde partie 3, aussi appelé navette dans la suite, de forme rectangulaire et de dimensions plus faibles que l'intérieur dudit cadre 2. Le première et le seconde parties 2, 3 sont solidarisées l'une à l'autre par quatre ressorts 4 disposés dans l'espace libre entre ces deux parties 2, 3 et au niveau de chacun des quatre coins de la seconde partie 3. Cette seconde partie 3 comporte aussi un second plot 5 disposé, dans cet exemple de réalisation, du côté opposé au montant du cadre 2 qui supporte le premier plot 6 et destiné lui aussi à être fixé sur ladite structure 15.

Les plots 5 et 6 constituent donc des zones d'ancrage du capteur 1 sur la structure 15 à surveiller. La surface interne 14 du cadre 2 constitue une butée pour la navette 3.

Comme, montré sur les figures 2 et 3 , la seconde partie 3 comporte, sur sa surface supérieure, un moyeu 10 cylindrique solidaire de trois lames 12 disposées tangentiellement au moyeu 10 et autour desquelles est placée une roue dentée 11.

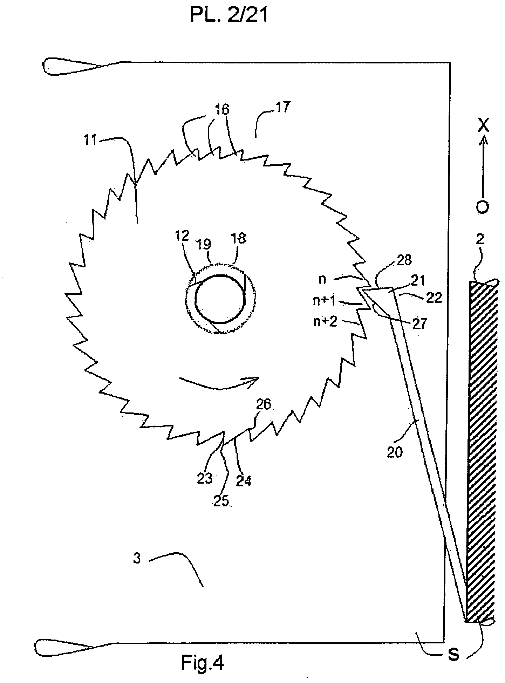

Comme montré sur la figure 4 , cette roue dentée 11 comporte des dents 16 sur sa surface périphérique externe 17 et une surface périphérique interne 19, préférentiellement rugueuse destinée à coopérer avec lesdites lames 12 pour former un dispositif anti-retour de la roue dentée 11.

Au moins une poutre d'entraînement 20, appelée poutre dans la suite, solidaire de la première partie 2 du support S comporte une dent 21 au niveau de son extrémité libre 22, cette dent 21 étant apte à former un engrenage, de type cliquet, avec celles de ladite roue dentée 11.

Sur cette figure, la direction OX indique la direction des déplacements relatifs de la première partie 2 du support par rapport à la seconde partie 3 aptes à être comptés par les moyens de comptage tandis que la flèche indique le sens normal de rotation de la roue 11 de comptage. Selon cette direction, chacune des dents 16 de cette première roue dentée 11 comporte une première surface radiale 23 et une surface inclinée 24 reliant l'extrémité supérieure 25 de ladite première surface radiale à la base 26 de la surface radiale de la dent suivante. Selon cette même direction, la dent 21 solidaire de la poutre d'entraînement 20 comporte une surface inclinée 27 et une surface radiale 28, cette dernière se trouvant en vis-à-vis avec ladite première surface radiale 23 d'une dent 16 de la première roue 11 de comptage.

Ainsi la dent 21 de la poutre d'entraînement présente une face d'entraînement qui vient en contact avec la dent de la roue de comptage pour tracter cette roue lors d'un déplacement dans un sens de l'élément entraînant et une face de guidage autorisant le glissement, et donc l'escamotage, de l'élément entraînant sur la dent de la roue de comptage lors d'un déplacement dans le sens opposé au précédent de l'élément entraînant.

La poutre d'entraînement présente une élasticité suffisante pour permettre l'escamotage d'une dent 16 sans détérioration.

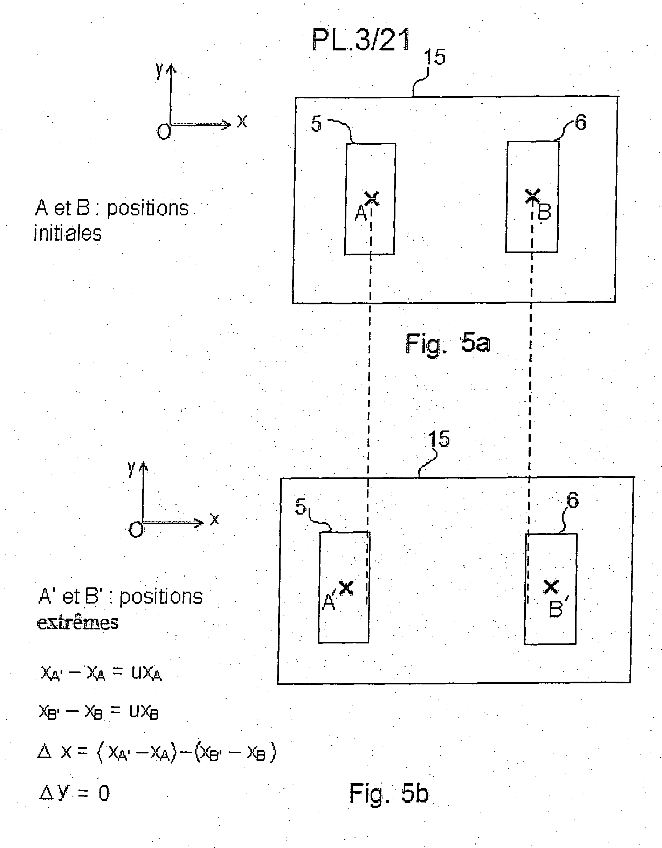

Comme montré sur la figure 5 , lorsqu'un tel capteur est fixé, par ses deux plots 5 et 6, sur une structure 15 soumise à une sollicitation produisant une déformation, par exemple une élongation seulement dans la direction Ox, cette déformation de la structure va engendrer une variation de l'écartement entre les plots 5 et 6 donc de leur centre respectifs. Soient A et B les centres respectifs des plots 5 et 6 dans leur position initiale ou normale et xAet xBleurs coordonnées selon l'axe Ox. Lorsque la structure 15 est soumise à une sollicitation, l'écartement entre les plots varie et les points A et B se retrouvent dans les positions extrêmes A' et B', leurs coordonnées étant alors xA'et xB'tandis que les plots reviennent dans leur position initiale, voire légèrement différente, à la fin de la sollicitation ou un certain temps après.

La différence de coordonnées entre la position initiale et la position extrême est donnée par l'expression suivante : Δx = x A' - x A - (x B' - x B)
Dessins disponibles sous "Document original"
Δy = 0 d'après l'hypothèse susmentionnée.

Cette différence d'écartement entre les plots 5 et 6 entraîne une variation de positionnement entre les première et seconde parties, respectivement 2 et 3. Comme la roue dentée 11 est solidaire de la seconde partie 3 et que la poutre d'entraînement 20, dont la dent 21 est engrenée sur la roue dentée 11, est solidaire de la première partie 2 du support S, ladite variation de positionnement produit un entraînement de la roue dentée 11 par la poutre d'entraînement 20 dans le sens de la flèche. Comme, dans cet exemple de réalisation, le déplacement relatif de la dent 21 de la poutre d'entraînement 20 par rapport à la deuxième partie 3 est de l'ordre de grandeur du pas des dents 16 de la roue dentée 11, à savoir, une fois et demi plus grand, la roue dentée 11 va être entraînée en rotation par la dent 21 de la poutre d'entraînement 20, les faces radiales respectives 23 et 28 de la dent n de la roue dentée 11 et de la dent 21 de la poutre d'entraînement 20 étant en contact. A la fin de la sollicitation, ou un certain temps après, les plots, et donc les supports correspondant reviendront dans leur position initiale mais le dispositif anti-retour, constitué des lames 12 et des secondes dents 18 de la roue dentée 11, empêche la roue dentée 11 de tourner dans le sens opposé à celui de la flèche tandis que, de part son élasticité, la face inclinée 27 de la dent 21 de la poutre d'entraînement glisse sur celle de la dent n+1 de la roue dentée 11 avec laquelle elle est en contact jusqu'à dépasser le sommet 25 de cette dent, la face radiale 28 de la dent 21 de la poutre d'entraînement se trouvant alors en regard de la face radiale 23 de la dent n+1 de la roue dentée 11.

A l'issue de ce cycle, les plots 5 et 6 sont revenus à leur position initiale tandis que la roue dentée 11 a tourné d'un pas de ses dents 16 dans le sens de la flèche.

En résumé, l'éloignement des plots 5 et 6, suite à une sollicitation, produit un entraînement de la roue dentée 11 par la dent d'entraînement 21 de la poutre d'entraînement 20 tandis que le rapprochement de ces deux parties, à la fin de la sollicitation, produit un maintien de la première roue dentée 11 par le dispositif anti-retour 12, 19 et un escamotage de la dent 21 de la poutre d'entraînement 20 sur une dent 16 de la première roue dentée 11.

Ainsi, la détection par le microcapteur d'un cycle de variations de distance se traduit par une rotation de la roue dentée 11, des repères associés à cette roue permettant ensuite de déterminer le nombre de cycles subis par la structure depuis une origine, où entre deux temps donnés.

Par ailleurs, il ressort de ce qui précède que pour permettre le comptage du nombre de cycles de déformations subis par une structure, il est nécessaire d'avoir une distance L entre les plots déterminée avec précision. C'est pour cette raison qu'il est nécessaire d'avoir des zones d'ancrage de faible dimension dans la direction OX de détection des déformations. Ceci est assuré par la présence des plots 5 et 6 qui permettent un collage de faible épaisseur e dans la direction OX et de hauteur h plus importante selon la direction Y perpendiculaire à OX, la faible épaisseur des plots 5 et 6 permettant de déterminer la dite distance L avec précision tandis que la hauteur h est suffisante pour permettre une bonne résistance du collage du microcapteur sur la structure.

Pour permettre un résultat similaire par collage, les plots peuvent aussi être remplacés par des encoches ou par des alésages.

En l'absence de zone d'ancrage constituées par des plots, des encoches ou des alésages, lors du placage du microcapteur sur la structure, les plots de colle s'étaleraient de façon aléatoire et la longueur L entre les deux zones d'ancrage pourrait prendre n'importe quelle valeur. Il ne serait donc pas possible de prévoir le fonctionnement du microcapteur pour le comptage des cycles de variations de distance entre deux points A et B d'une structure.

Par ailleurs d'autres modes de fixation que le collage peuvent être envisagés tels que la fixation du microcapteur sur la structure par vis ou par goupille. Pour cela chacun des plots est remplacé par au moins un alésage et préférablement deux alésages positionnés de sorte que leur diamètre d soit très inférieure à la distance D séparant leur axe, par exemple d/D<0,2.

Il peut notamment être envisagé de fixer le capteur à l'aide de goupilles précontraintes Pour cela, le capteur est précontraint en usine par un cadre extérieur qui peut d'ailleurs faire office de packaging du capteur. On réalise d'une part un alésage sur le support, de diamètre légèrement inférieur à celui de la goupille, de façon à garantir un ajustement serré entre la goupille et le support, et, d'autre part, un alésage sur la structure, cette fois-ci de diamètre légèrement supérieur à celui de la goupille pour permettre la mise en place du capteur et le rattrapage du jeu.

Après fixation sur la structure, avec un gabarit de perçage présentant un entraxe ad hoc, la précontrainte est relâchée. Les génératrices "extérieures" des goupilles viennent alors en contact avec les génératrices des trous préalablement percés dans la structure permettant un rattrapage de jeu.

Les déplacements induits par la structure sont alors intégralement transférés au capteur.

Naturellement, le signe de la précontrainte peut être inversée si le signe des sollicitations induites par la structure est lui-même inversé.

Il peut aussi notamment être envisagé de fixer le capteur sur la structure à l'aide de vis. Cette solution implique de réaliser un alésage sur le support, de diamètre légèrement supérieur à celui de la vis, pour permettre son passage, et un taraudage sur la structure pour visser la vis.

Ce mode de fixation ne nécessite pas obligatoirement de précontrainte. Il exige en revanche d'immobiliser les parties mobiles pendant le serrage des vis car celui-ci peut induire des déplacements parasites par friction. Il peut donc être opportun d'utiliser un capot extérieur de maintien de la forme du capteur. Ce capot immobilise les parties mobiles pendant la pose.

Il ressort de ce qui précède que la réalisation de plots, d'encoches ou d'alésage comme zone d'ancrage permet de connaître avec précision la distance L séparant les zones d'ancrage et donc de permettre le comptage des cycles de variations de distance entre deux points A et B d'une structure. Connaissant les caractéristiques de la déformation de la structure, et compte tenu du pas P des dents de la roue de comptage, on détermine la distance L entre les points d'ancrage de sorte que lors de la déformation de la structure, la variation de distance entre les zones d'ancrage 5 et 6 soit supérieure au pas P des dents de la roue de comptage et préférentiellement voisine ou égale à 1,5. P.

De cette description, il ressort que d'une part la distance entre les zones d'ancrage doit être déterminée avec précision et d'autre part que le pas de la denture de la première roue d'entrée doit être de l'ordre de grandeur du déplacement relatif desdites parties 2 et 3 du support S. Les techniques traditionnelles permettent de réaliser des dentures de quelques microns mais celles-ci peuvent s'avérer insuffisantes pour capter des déplacements submicroniques. Or, les déplacements relatifs mis en jeu dans des phénomènes de compression mécanique ou de dilatation thermique peuvent être submicroniques.

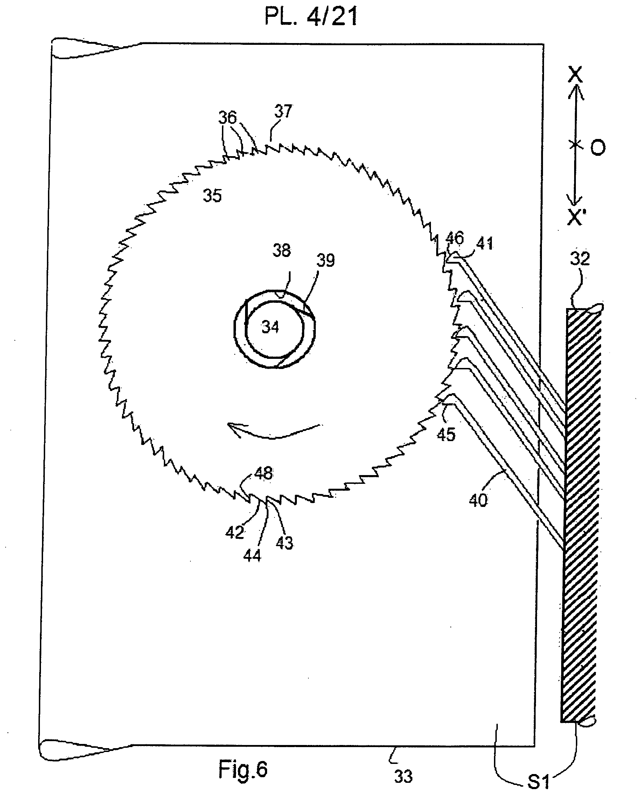

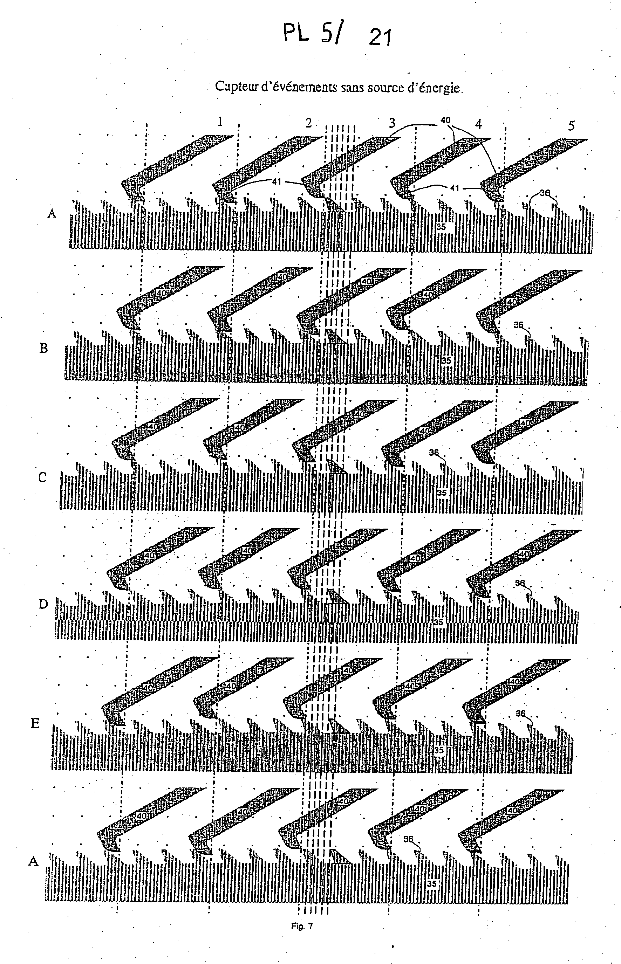

Un principe de subdivision du pas est proposé de manière à pouvoir enregistrer un déplacement relatif inférieur au pas de la denture de la roue dentée, et ce, dans le cadre d'un capteur 30 selon un second mode de réalisation de l'invention. Ce principe permet d'une part d'accroître la sensibilité du capteur puisqu'il permet d'accéder à des niveaux de sensibilité plus grands que la périodicité des motifs géométriques à laquelle la technologie de fabrication permet d'arriver et d'autre part l'utilisation de techniques moins sophistiquées pour la réalisation du composant donc se traduire par un coût de fabrication inférieur et par une meilleure robustesse du capteur. Les figures 6 et 7 présentent, plus particulièrement, un moyen de comptage avec une subdivision du pas par 5.

Comme montré sur la figure 6 , un capteur 31 selon ce second mode de réalisation de l'invention comporte un support S1 possédant une première partie 32 et une seconde partie 33, cette dernière possédant un moyeu 34 cylindrique solidaire de trois lames 39 disposées tangentiellement au moyeu 34 et autour desquelles est placée une roue dentée 35.

Cette roue dentée 35 comporte des dents 36 sur sa surface périphérique externe 37 et une surface périphérique interne 38 de forme cylindrique.

Cinq poutres d'entraînement 40, solidaires de la première partie 32 du support S1 et disposées sensiblement parallèlement les unes par rapport aux autres comportent, chacune une dent 41 au niveau de leur extrémité libre 42, ces dents 41 étant disposées entre-elles à une distance multiple du pas P de la denture de la roue plus une fraction de ce pas, à savoir un cinquième de ce pas de sorte que l'une seulement de ces dents constitue un engrenage avec des dents 36 de ladite roue dentée 35. D'une manière générale, l'écartement entre deux dents successives des poutres 40 sera : E = l1 . P + l2 . P / m
où,
m est le nombre de poutres,
l1 et l2 sont des nombres entiers
P est le pas des dents 36 de la roue 35 E = l1 . P + l2 . P / m
Dessins disponibles sous "Document original"
avec
m est le nombre de poutres,
l1 et l2 sont des nombres entiers naturels et : l2 ≠ 0
Dessins disponibles sous "Document original"
l1 ≠ 0 si 2 l≤m Dessins disponibles sous "Document original"

Et préférentiellement, pour permettre une indexation en vernier, l2≠ m.

Sur cette figure, la direction OX', opposée à OX, indique la direction des mouvements ou déplacements relatifs de la première partie 32 du support par rapport à la seconde partie 33 aptes à être comptés par les moyens de comptage tandis que la flèche indique le sens normal de rotation de la roue 35 de comptage. Selon cette direction, chacune des dents 36 de cette première roue dentée 11 comporte une première surface radiale 43 et une surface inclinée 42 reliant l'extrémité supérieure 44 de ladite première surface radiale à la base 48 de la surface radiale 43 de la dent suivante. Selon cette même direction, chacune des dents 41 solidaires de la poutre d'entraînement 40 comporte une surface inclinée 46 et une surface radiale 45, cette dernière se trouvant, pour l'une des dents 41, en vis-à-vis à face avec ladite première surface radiale 43 d'une dent 36 de la première roue 35 de comptage.

Les poutres d'entraînement 40 présentent une élasticité suffisante pour permettre l'escamotage de leur dent 41 sur une dent 36 de la première roue 35 de comptage, et ce, sans détérioration.

La surface périphérique interne 38 de la roue dentée 35 et l'extrémité des dites lames 39 sont destinées à coopérer pour former un moyen d'accommodation élastique de la roue dentée 35 sur le moyeu 34, la force de frottement de l'extrémité des lames 39 sur la surface périphérique interne 38 de la roue 35 étant, d'une part, supérieure à celle que peuvent engendrer les poutres d'entraînement lorsqu'elles sont dirigées dans une première direction OX, entraînant alors un glissement des dents 41 des poutres 40 sur la roue 35 et, d'autre part, inférieure à celle que peuvent engendrer les poutres d'entraînement lorsqu'elles sont dans une seconde direction OX', opposée à ladite direction OX, entraînant alors un glissement de la surface périphérique interne 38 de la roue 35 sur les extrémités des lames 39. Le glissement de la roue sur les extrémités des lames 39 est autorisé par un dimensionnement correct du moyen d'accommodation élastique du couple résistant par rapport au cisaillement possible de la dent 41 de la poutre 40 ou de celle, 36, de la roue dentée 35.

La figure 7 présente un schéma du fonctionnement des moyens de comptage constitués par les poutres, la roue dentée 35, le moyeu 34 et le moyen d'accommodation élastique du couple résistant et pour lequel la seconde partie 33 du support S1 est supposée, dans cet exemple, se déplacer par rapport à la première partie 32 du support S1 selon la direction OX'.

Les différentes phases sont respectivement numérotées de 1 à 5 et de A à E.

Dans la phase A, la roue dentée 35 s'est déplacée par rapport aux poutres 40 fixes. La poutre 3 franchit la dent représentée en sombre de la roue dentée 35, et de part la configuration géométrique des dentures, interdit le retour de la dent, les poutres 40 étant représentées sur ce premier schéma juste avant le passage de la dent pour bien identifier les séquences, au lieu de les représenter après le franchissement. Les poutres 4 et 5 sont mises en flexion par la denture. Les poutres 1 et 2 seront également mises en flexion lors du prochain déplacement relatif de la roue.

L'application du cycle de chargement suivant de la phase B provoque, un deuxième déplacement relatif de la première roue par rapport aux poutres fixes. Cette fois ci, c'est la poutre 4 qui se retrouve à passer une autre dent de la roue dentée 35 et à interdire le retour de cette roue en un autre point de la denture de la roue que celui de la phase A.

De même, lors de la phase C, la poutre 5 vient de franchir la denture de la roue et interdit son retour en autre endroit que celui de la phase B. Il en est de même des phases D et E.

Lors de la prochaine phase A, la poutre 3 franchit de nouveau une dent de la roue dentée. Cette dent est celle qui est consécutive à celle représentée en sombre sur tous les schémas. Par conséquent, les cinq cycles de sollicitation se sont traduits au niveau de la première roue par l'engrènement d'une dent, illustrant le principe de subdivision du pas, donc la possibilité de détecter et d'enregistrer une information avec une résolution supérieure à celle intrinsèque du système.

Un tel dispositif permet de détecter et de compter des cycles de variations de distance inférieures à 5µm. En augmentant le nombre de poutres, des variations de distances inférieures à 1µm peuvent être détectées et comptées.

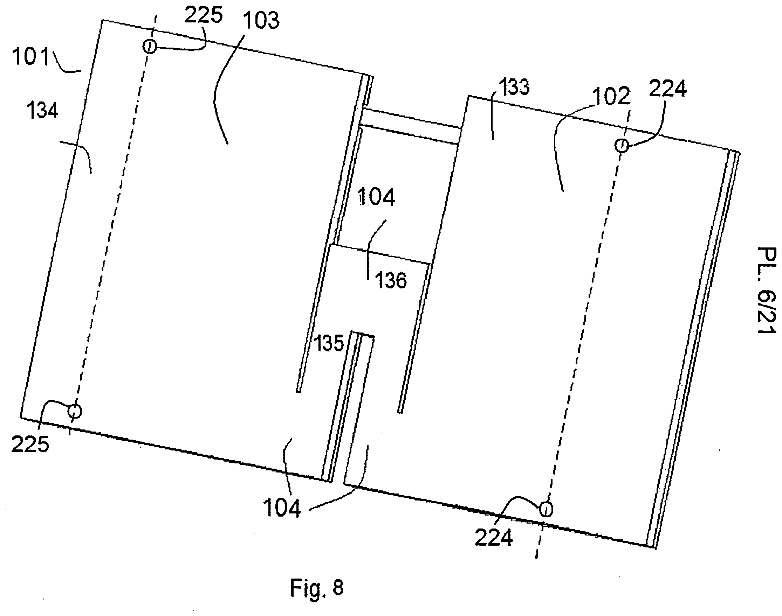

Les figures 8 à 18 montrent des schémas d'une troisième variante de réalisation de l'invention appliquée au comptage du nombre de passage de véhicules sur une structure, telle par exemple un pont.

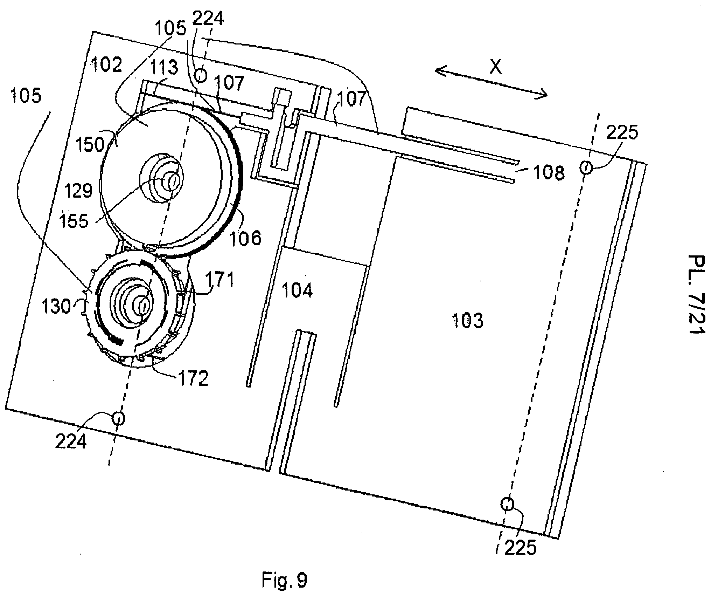

Les figures 8 et 9 présentent l'une et l'autre des deux faces principales du capteur selon cette troisième variante de réalisation de l'invention.

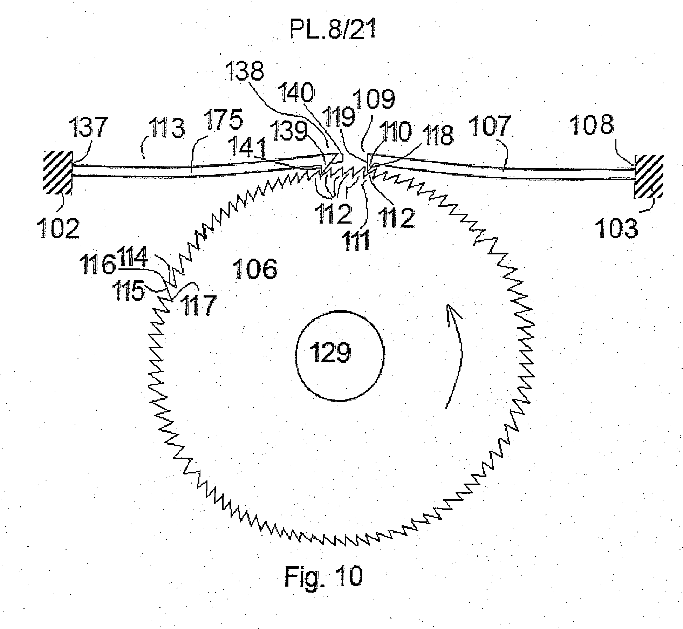

Selon ce mode de réalisation, un microcapteur passif de détection et de comptage du nombre de passage de véhicules comprend un support 101, principalement en forme de U comportant ainsi une première partie 102 et une deuxième partie 103 reliées entre-elles par une troisième partie 104 constituant la base du U, et des moyens de comptage 105 disposés sur le support et comportant au moins une première roue dentée 106 disposée sur ladite première partie 102 du support 101 et, d'une part, une poutre d'entraînement 107 de cette première roue dentée 106 fixée, à l'une, 108, de ses extrémités 108, 109, à ladite deuxième partie 103 et comportant, à son autre extrémité 109, une dent 110, montrée sur la figure 10 , et apte à constituer un engrenage 111 avec les dents 112 de la première roue dentée 106, et d'autre part, un dispositif anti-retour 113 de la première roue dentée 106 et de telle sorte que le rapprochement des première et seconde parties 102, 103 du support 101 produit un entraînement de la roue dentée 106 par la dent d'entraînement 110 de la poutre d'entraînement 107 tandis que l'éloignement de ces deux parties produit un maintien de la première roue dentée 106 par le dispositif anti-retour 113 et un escamotage de la dent 110 de la poutre d'entraînement sur une dent 112 de la première roue dentée 106.

Comme montré sur la figure 8 , les premières et secondes parties comportent des premières et secondes zones d'ancrage, respectivement 224 et 225, constituées par des alésages dans chacun desquels peut être insérée une vis en vue de la fixation du microcapteur sur la structure à analyser telle par exemple que le parapet d'un pont. Les alésages 224, 225 ont un diamètre légèrement supérieur à celui desdits vis.

Dans cet exemple de réalisation, les premières et secondes zones d'ancrage 224, 225 sont disposées respectivement selon un premier axe Y1 et un second axe Y2 parallèles entre eux et séparés par une distance L. D'une manière préférentielle permettant de réduire au minimum la taille du capteur, ces zones d'ancrages sont disposées de telle sorte que la longueur L soit la plus grande possible et de telle sorte que la déformation de la structure entre les axes Y1 et Y2 soit au moins égale à P. En effet, lorsque le microcapteur est fixé sur une structure soumise à une déformation, la variation de distance entre les deux zones d'ancrage 224 et 225, donc entre les axes Y1 et Y2 est proportionnelle à cette longueur L. Par conséquent, pour un pas P donné des dents de la roue de comptage, et dans le cas de l'utilisation d'une seule poutre d'entraînement, la déformation de la structure entre les axes Y1 et Y2 doit au moins être égale à P et préférentiellement inférieure ou égale à 1,5.P.

Comme montré sur la figure 9 , les faces 133, 134 et 135 des parties respectives 102, 103 et 104 du support 101 sont planes et disposées dans un même plan et destinées à être plaquées contre la structure à analyser via lesdits vis.

Dans cet exemple de réalisation la troisième partie 104 du support a elle-même une forme de U inversé avec une base 136 épaisse. Cette forme permet d'avoir des sections plus petites au niveau des branches du U de cette poutre que de la base 136 et dans le cas où une force importante était exercée au niveau de cette troisième partie une cassure surviendrait au niveau de l'une des branches et donc dans une direction parallèle à celle du déplacement normal des premières et secondes parties, ce qui permet d'éviter tout déplacement relatif entre ces parties dans la direction normale du déplacement et d'éviter un éventuel décalage entre la roue dentée 106 et la dent 110 de la poutre d'entraînement 107.

Sur la figure 10 la flèche indique le sens normal de rotation de la roue 106 de comptage. Selon cette direction, chacune des dent 112 de cette première roue dentée 106 comporte une première surface radiale 114 et une surface inclinée 115 reliant l'extrémité supérieure 116 de ladite première surface radiale à la base 117 de la surface radiale de la dent suivante. Selon cette même direction, la dent 110 solidaire de la poutre d'entraînement 109 comporte une surface inclinée 118 et une surface radiale 119, cette dernière se trouvant en face à face avec ladite première surface radiale 114 d'une dent 112 de la première roue 106 de comptage.

Cette première roue dentée 106 comporte 512 dents soit 2<9>.

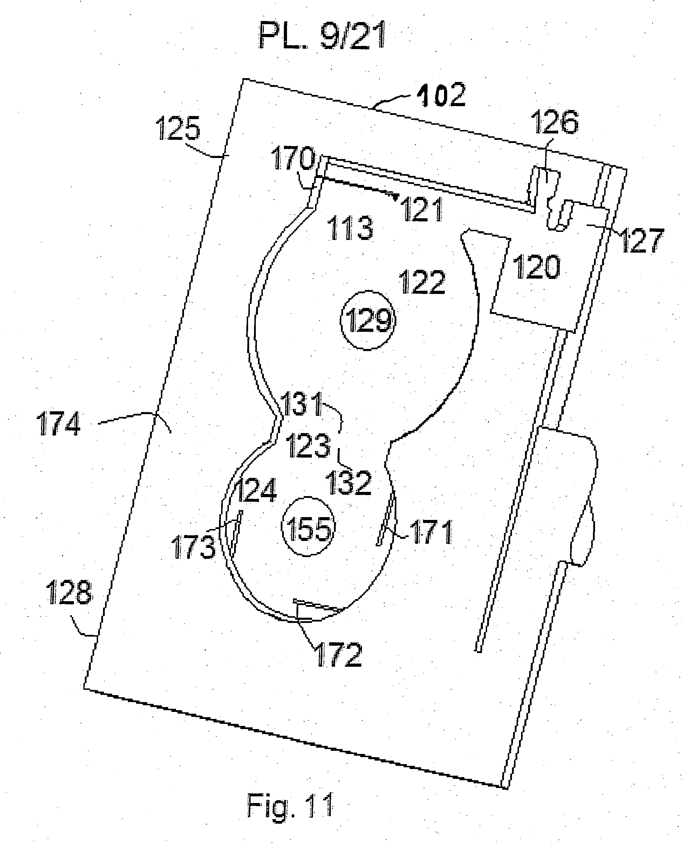

La figure 11 montre l'une des deux faces principales de la première partie 102 du support apte à recevoir une partie des moyens de comptage 105. Cette surface 174 comporte plusieurs gravures successives 120, 121, 122, 123 et 124 comportant certaines parties communes.

La première gravure 120 est disposée dans la partie supérieure 125 de la première partie et du côté de la première partie 102 du support. Elle a la forme d'un U à base épaisse et l'une des branches 126 est plus longue que l'autre 127.

La seconde gravure 121 est de forme rectangulaire allongée et disposée dans la continuité de la première et en direction du côté opposé à la troisième partie 104 du support 101. Toutefois, cette gravure n'est pas complète car il reste un dispositif anti-retour 113 disposé longitudinalement sur moins de la moitié de la longueur de la gravure et fixé à la première partie 102 du support 101 par son extrémité située au niveau du côté transversal 170 de la gravure qui est à l'opposé de la première gravure 120.

La troisième gravure 122 est de forme cylindrique et disposée dans la continuité de la seconde et en dessous, c'est-à-dire en direction de la partie basse 128 de la première partie 102 du support 101. Toutefois, la gravure n'est pas complète car il reste une partie centrale cylindrique 129. Cette gravure 122 est destinée à recevoir la première roue de comptage 106 et son diamètre est légèrement supérieur à celui de cette dernière. De plus, la première roue de comptage 106 comporte un alésage central et la partie centrale cylindrique 129 constitue un axe pour cette première roue dentée 106.

La quatrième gravure 123 est de forme rectangulaire et comporte une partie inférieure 31 de la troisième gravure 122 et une partie supérieure 132 de la cinquième gravure 124.

La cinquième gravure 124 est de forme cylindrique de diamètre légèrement inférieur à celui de la troisième gravure 122 et disposée tangentiellement à cette dernière et dans la direction de la partie inférieure 128 de cette première partie 123 du support. Cette gravure 124 est destinée à recevoir une seconde roue dentée de comptage 130 et n'est pas complète car il reste d'une part une partie centrale cylindrique destinée à servir d'axe de rotation 155 à la seconde roue dentée de comptage 130 et d'autre part trois poutres 171, 172 et 173 disposées respectivement à π/2 Rd et aptes à maintenir en position et à servir de dispositif anti-retour à la seconde roue dentée 30. Cette dernière comporte 16 dents soit 2<4>.

La figure 10 montre un schéma simplifié des moyens de comptage et du dispositif anti-retour. Ainsi, sont représentés :
la première roue dentée 106 disposée sur l'axe 129,
la poutre d'entraînement 107 solidaire de la deuxième partie 103 du support 101 et comportant une dent 110 apte à constituer un engrenage 111 avec celles 112, de la première roue dentée 106,
un dispositif anti-retour 113 de la première roue dentée 106 constituée par une poutre 175 solidaire par l'une de ses extrémités 137 de la première partie 102 du support 101 et comportant, à son autre extrémité 138 une dent 139 apte à constituer un engrenage avec celles, 112, de la première roue dentée 106. La flèche indiquant le sens normal de rotation de la première roue dentée de comptage 106, la dent 139 du dispositif anti-retour comporte, selon cette direction, une surface inclinée 140 et une surface radiale 141, la surface radiale 140 se trouvant en face à face avec une surface radiale d'une dent 112 de la première roue dentée 106.

Comme montré sur cette figure, la poutre d'entraînement 107 et celle, 75, du dispositif anti-retour sont mises en précontrainte en flexion sur la roue dentée 106 de par leur positionnement. En effet l'extrémité des dents n'est pas tangentielle à la base des dents de la première roue dentée 106 mais tangentielle à une position située plus proche de l'axe de cette roue, Comme ces poutres ne peuvent aller au-delà de ladite base, elles sont automatiquement soumises à ladite précontrainte exercée par la première roue dentée 106.

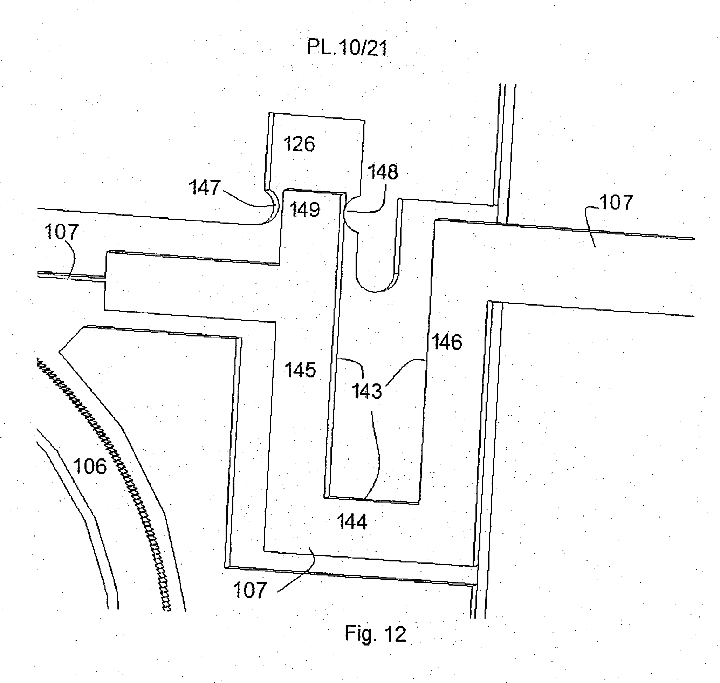

La figure 12 présente un détail de la partie intermédiaire 143 de la poutre d'entraînement 107 qui se trouve au niveau de la première gravure 120 de la première partie du support 101.

Cette partie intermédiaire 143 est en forme de U dont la base 144, et les deux branches 145, 146 ont sensiblement la même épaisseur, l'une, 145 ,des branches étant plus longue que l'autre et destinée à pénétrer dans la partie plus longue de la branche 126 de la première gravure du premier support 101 et qui, comme on peut le voir sur cette figure, comporte deux butées 147, 148 faisant chacune face à l'un des côté de la partie plus longue 149 de la branche 145 de la poutre d'entraînement.

La fonction de ces excroissances est de limiter le déplacement de la poutre d'entraînement en direction de la première partie du support, d'une valeur calibrée et correspondant sensiblement à la valeur d'un pas et demi des dents 112 de la première roue dentée 106. Ces excroissances constituent ainsi des moyens de limitation de course de la dent 110 de la poutre d'entraînement 107, ou, en d'autres termes, des butées.

On constate par ailleurs que l'épaisseur de la poutre d'entraînement au delà de cette partie intermédiaire est d'abord équivalente à celle de cette partie puis plus faible jusqu'à son extrémité comportant la dent d'entraînement 110, cette faible épaisseur étant apte à lui assurer une élasticité suffisante pour permettre l'entraînement de la roue dentée 106 par la dent d'entraînement 110 dans un sens aller et l'escamotage de cette dent 110 d'entraînement sur celles, 112, de la première roue dentée 106 dans le sens retour.

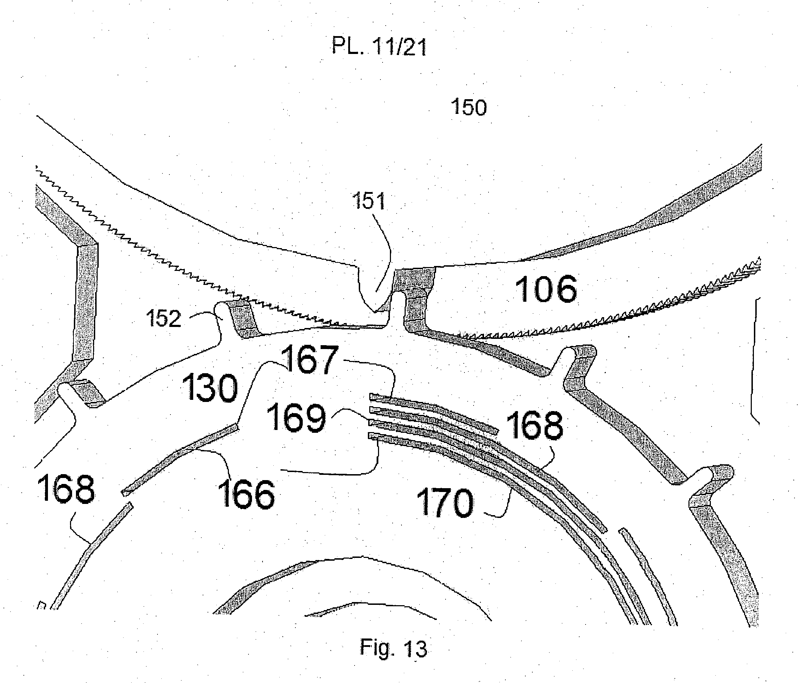

Comme montré sur les figures 9 et 13 , une troisième roue dentée de comptage 150 de diamètre plus faible que la première roue dentée 106 est fixée sur cette dernière, ces deux roues ayant le même axe de rotation.

Comme montré sur la figure 9 , ledit axe Y1 passe par les axes de rotation des première, seconde et troisième roues de comptage ainsi que par les axes des alésages des premières zones d'ancrage. Cet axe Y1 est perpendiculaire à la direction X des déformations de la structure aptes à être détectées par le microcapteur sur laquelle il est fixé.

Cette troisième roue dentée de comptage 150 comporte une seule dent 151 en forme d'arche gothique apte à constituer un engrenage avec celles 152, en forme d'arche romane, de la seconde roue de comptage 130, ces deux roues 130, 150 ayant la même épaisseur et étant disposées dans un même plan. Cette troisième roue dentée 150 est disposée dans la quatrième gravure 123 de la première partie 102 du support 101 et comporte un alésage de diamètre sensiblement égale à l'axe 155 émergeant de la quatrième gravure. La longueur des dents 152 et 151 des seconde et troisième roues dentées 130 et 150 est telle que lorsque la dent 51 de la troisième roue dentée 150 entre en contact avec une dent 152 de la seconde roue dentée 130, ce contact perdure sur une longueur sensiblement égale au pas des dents 152 de la seconde roue dentée 130.

Des moyens de lecture optiques de type lecteur de codes barres sont associés aux moyens de comptage afin de faciliter la lecture.

Comme montré sur la figure 13 , des gorges 166 en arc de cercles parallèles en l'occurrence quatre au maximum sont associées aux dents 152 de la seconde roue dentée 130 et permettent de les numéroter de façon binaire, la dent numérotée 1 ne comportant aucune gorge associée, la dent numéro 2 ayant une gorge au niveau d'une première ligne 167, la dent numéro 3 ayant une gorge au niveau de la deuxième ligne 168, la dent n°4 ayant une gorge au niveau de chacune des deux premières lignes 167 et 168 etc... et ce, jusqu'à la 16<ème>dent à laquelle correspond une gorge au niveau de chacune des quatre lignes 167 à 170.

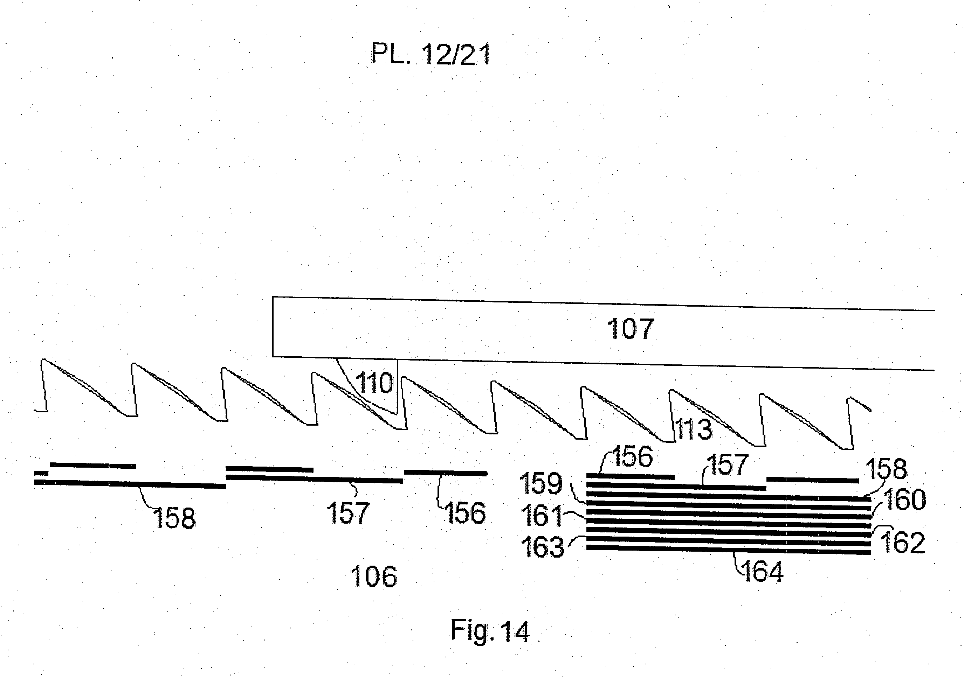

Comme montré sur la figure 14 qui ne présente qu'une infime partie de la première roue dentée 106 dans laquelle les dents ont été considérées comme étant disposées dans un même plan, des gorges parallèles en l'occurrence neuf au maximum sont associées aux 512 dents de la première roue dentée 106 et permettent de les numéroter de façon binaire, la dent numérotée 1 ne comportant aucune gorge associée, la dent numéro 2 ayant une gorge au niveau d'une première ligne 156, la dent numéro 3 ayant une gorge au niveau de la deuxième ligne 157, la dent n°4 ayant une gorge au niveau de chacune des deux premières lignes 156 et 157 etc... et ce, jusqu'à la 512<ème>dent qui a une gorge au niveau de chacune des neuf lignes 156 à 164.

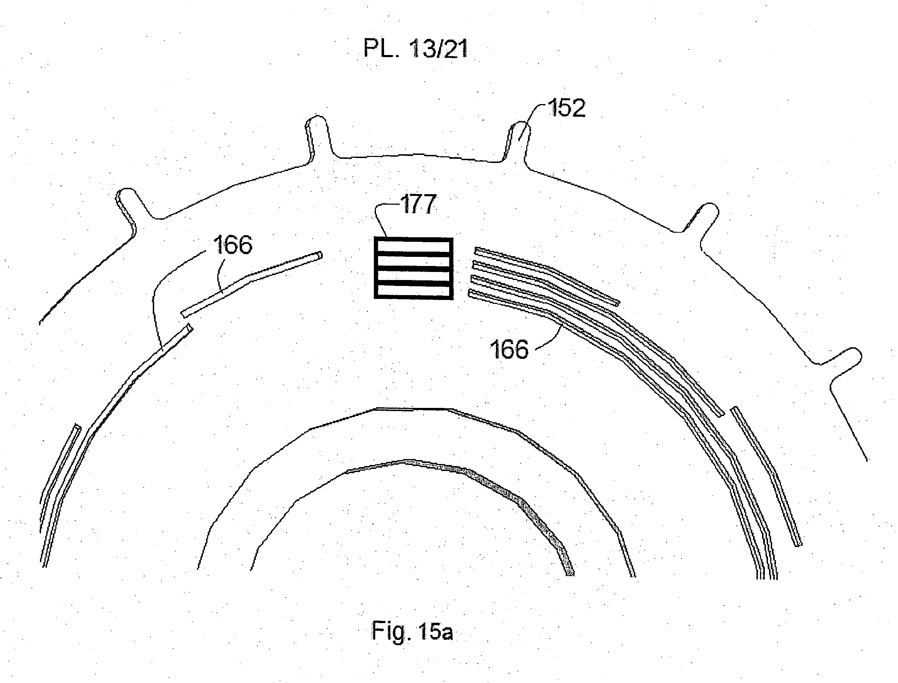

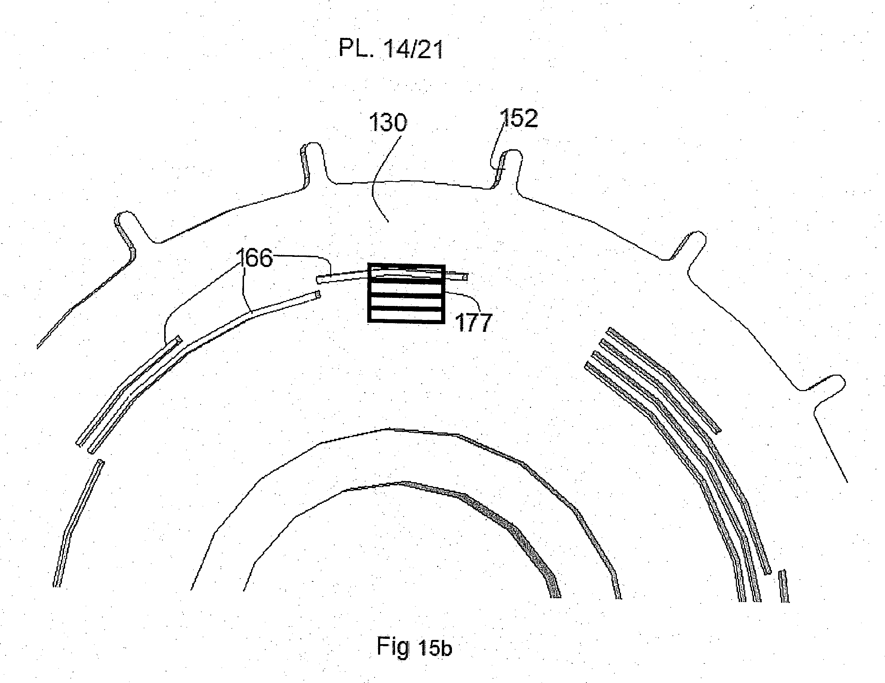

Pour effectuer la lecture du nombre de passages de véhicule entre un temps t0 et un temps t1, on effectue une lecture optique de la numérotation des dents sur chacune des première et seconde roues dentées 106 et 130 à l'instant to puis à l'instant t1, le lecteur ayant la même position à ces deux instants. L'image de la première lecture au temps t0 est celle de référence qui permet de déterminer quelle dent était engagée au moment de l'installation du dispositif. La deuxième image sert à identifier la dent engagée au moment t1, choisi par l'opérateur. L'identification de la dent engagée peut se faire de manière automatisée en important les deux images dans un logiciel de traitement d'images en générant un masque 177 délimitant les zones de lecture comme montré sur les figures 15a et 15b . Chaque zone de lecture sera soit noire s'il y a présence d'une gorge et équivalente à 1, soit blanche s'il n'y a pas de gorge et alors équivalente à 0, ce qui permet de calculer le nombre binaire associé à la dent. Dans l'exemple proposé, on lit le nombre 0000 sur la figure 15a associée à la seconde roue dentée, correspondant à 0 en base 10 et on lit 0001 sur la figure 15b , correspondant à 1x2<0>+ 0x2<1>+ 0x2<2>+ 0x2<3>= 1 en base décimale. Cela signifie que la structure a subi (1 - 0) x 512 événements, auxquels il convient de rajouter ceux comptabilisés sur la première roue dentée et qui sont déterminés de la même manière.

Tous les éléments de ce microcapteur sont réalisés en silicium ce qui lui permet de fonctionner correctement qu'elle que soit sa température de fonctionnement puisque les dilatations ou les constrictions qui en résultent seront les mêmes dans toutes les direction pour tous les composants.

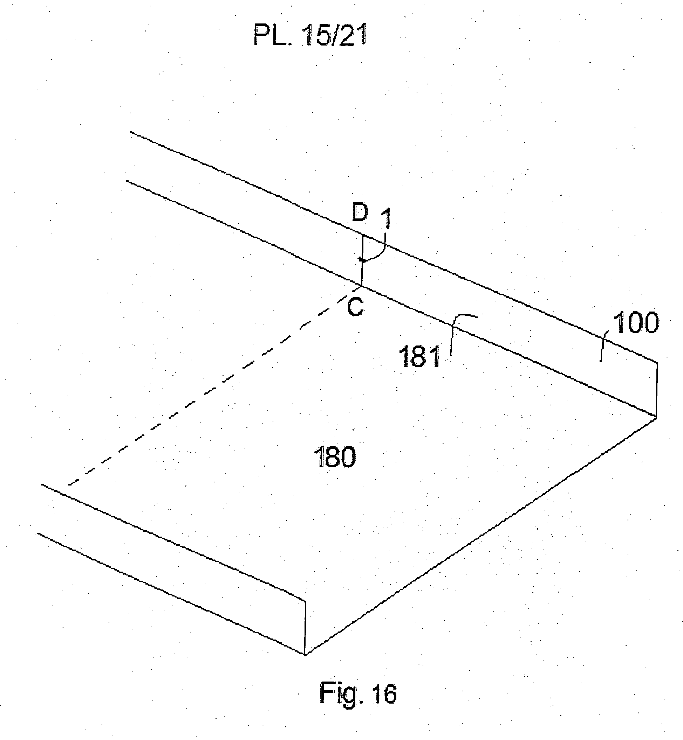

Le fonctionnement du dispositif décrit précédemment est le suivant :
Il est tout d'abord fixé, comme montré sur la figure 16 , par exemple avec de la colle et par ses surfaces planes 133 et 134 des premières et secondes parties du support 101 sur le parapet 181 d'un pont 100 comportant une chaussée 180 sur laquelle circule des véhicules.

Ce microcapteur est positionné sur le parapet de part et d'autre d'une droite virtuelle CD verticale. Pour une position donnée du capteur sur le parapet, le microcapteur ne comptera le passage du véhicule en fonction d'une valeur seuil correspondant à la masse du véhicule. Il sera ainsi par exemple possible de détecter, avec trois capteurs identiques mais disposés à des endroits différents du parapet, le nombre de véhicule passant d'une masse supérieure à 500kg pour l'un, le nombre de véhicule de plus de 3500kg pour le second et tous les véhicules de plus de 10000kg pour l'autre.

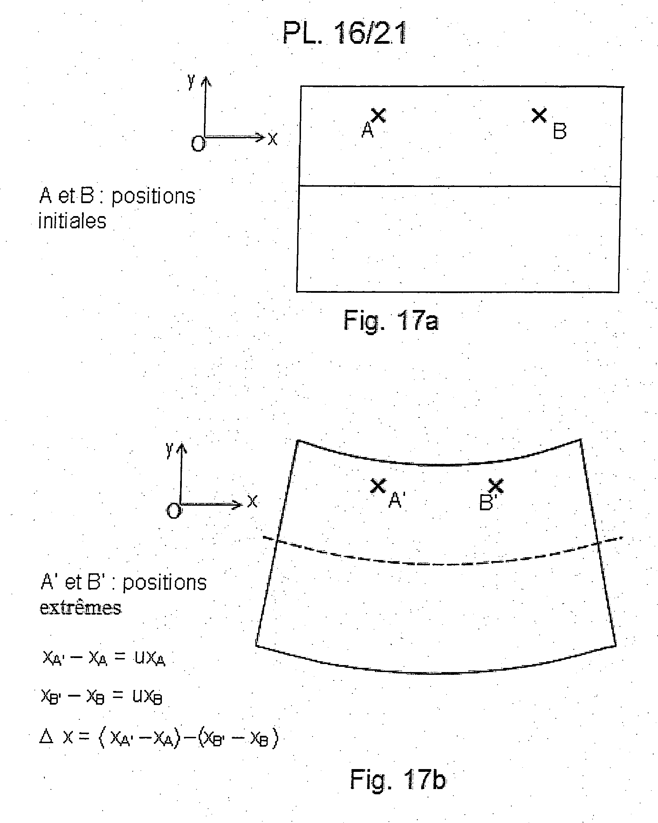

Comme montré sur les figures 17a et 17b , lorsqu'un véhicule passe sur la chaussée 180 à la droite, matérialisée par des tirets, de la droite CD, le poids de celui-ci produit un fléchissement de la chaussée qui se répercute au niveau du parapet, ou les points A et B situé de part et d'autre de la droite CD se déplacent depuis leur position de repos (figure 17a) jusqu'aux positions extrêmes respectives A' et B' (figure 17b) avant de revenir à leur position initiale après que le véhicule soit passé. Donc, lorsque qu'un véhicule roule sur la chaussée à la droite d'un microcapteur selon l'invention, il produit, de par son poids, un fléchissement de la chaussée qui se répercute au niveau du parapet du pont qui lui est solidaire par un rapprochement des points A et B. Soient 0x et Oy deux axes orthogonaux, le déplacement du point A selon la direction Ox est xA'-xAet celle du point B xB'-xBtandis que les déplacements respectifs des points A et B selon la direction Oy sont yA'-yAet yB'-yB.

Dans le cadre de l'exemple de réalisation précité, c'est la différence de déplacement des points A et B selon l'axe Ox, à savoir Δx = (xA'-xA) - (xB'-xB) qui est mise en jeu pour actionner les moyens passifs de comptage, le point A se trouvant sur la première partie 102 du support 101 et la point B se trouvant sur la seconde partie 103 du support 101. Ainsi, Δx est supérieur au pas des dents 112 de la première roue dentée 106 et préférablement inférieur à 2 fois ce pas. Dans tous les cas, les butées 147, 148 sont aptes à limiter le déplacement de la première partie du support 101 par rapport à le second partie d'une distance Δx, par rapport à leur position de repos, supérieure au pas des dents 112 de la première roue 106, mais inférieure à deux fois ce pas.

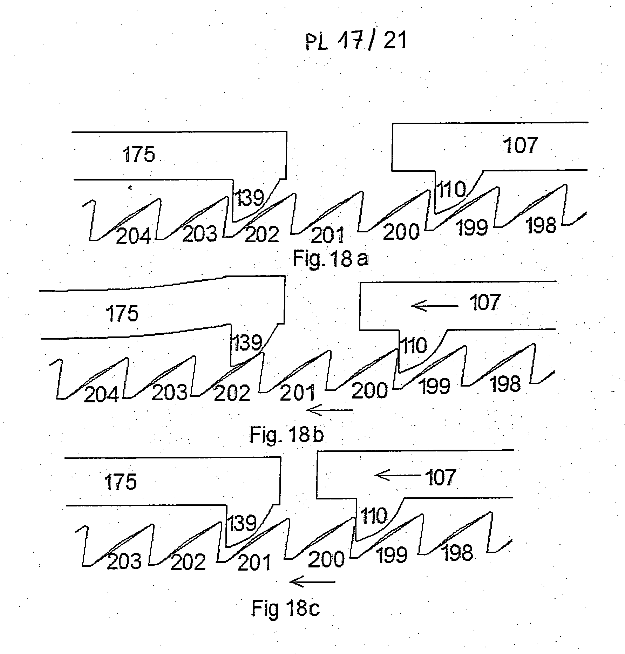

Les figures 18a à 18e montrent l'évolution du positionnement de la dent d'entraînement 110 par rapport aux dents 112 de la première roue dentée 106 pour des instants successifs t0, t1, t2, t3 et t4, t0 et t4 correspondant à la position d'équilibre et t2, la position où le rapprochement entre les première et seconde parties 102, 103 du support 101 est maximal.

Sur la figure 18a , les première et seconde parties 102, 103 du support 101 sont en position de repos. La face radiale de la dent d'entraînement 110 ainsi que celle du dispositif anti-retour 113 sont chacune en regard d'une face radiale d'une dent, respectivement 200 et 203, de la première roue dentée 106, les faces en regard n'étant pas en contact.

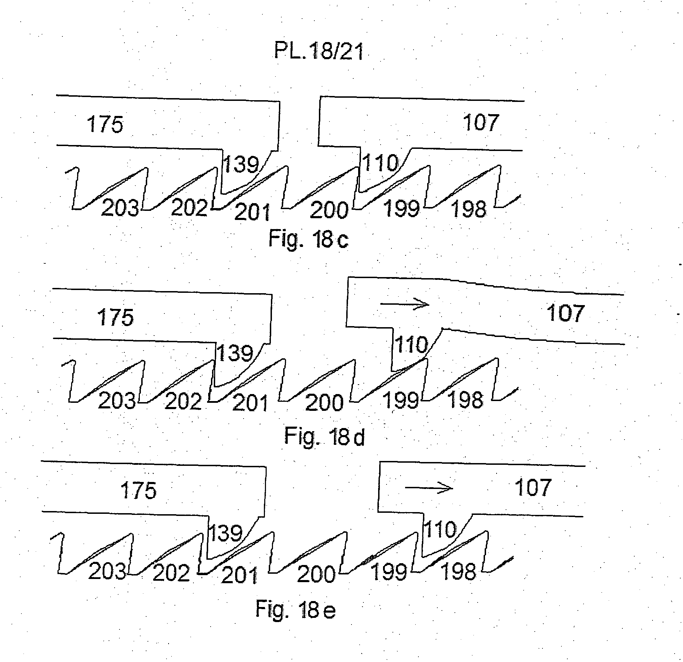

Lorsqu'un véhicule commence à passer sur la chaussée 180 à la droite de la droite CD, les première et seconde parties 102, 103 du support 101 commencent à se rapprocher comme montré sur la figure 18b . La face radiale de la dent d'entraînement 110 entre en contact avec la face radiale de la dent 200 puis la pousse dans le sens de la flèche ce qui fait tourner la première roue dentée 106. Parallèlement, l'extrémité de la dent anti-retour du dispositif anti-retour 113 glisse, de part l'élasticité de la poutre 175 sur la surface inclinée de la dent 202 de la première roue 106, ce glissement se produisant jusqu'à ce que cette dent anti-retour passe au-delà de la surface inclinée et que sa surface radiale se retrouve, comme montré sur la figure 18c , en regard de la surface radiale de la dent 202.

A cet instant, soit naturellement, soit du fait des butées 147 et 148, ledit rapprochement s'arrête et l'on constate que la dent 200 de la roue dentée a pris la position initiale de la dent 201, la roue 106 ayant donc tourné d'une distance sensiblement égale à un pas des dents de cette roue 106.

Lorsque le véhicule a dépassé la droite de la droite CD, les première et seconde parties 102, 103 du support 101 commencent à s'éloigner pour revenir à leur position de repos. La face inclinée de la dent d'entraînement va entrer en contact avec la face inclinée de la dent 199 et commencer à faire tourner la première roue dentée 106 dans le sens inverse à la flèche et ce jusqu'à ce que la face radiale de la dent anti-retour 139 entre en contact avec la face radiale de la dent 202. A cet instant le dispositif anti-retour va empêcher toute rotation supplémentaire de la première roue dentée 106 dans le sens opposé à celui de la flèche. Comme montré sur la figure 18d , l'extrémité de la dent d'entraînement 110 glisse, de part l'élasticité de la poutre 107 à ce niveau, sur la surface inclinée de la dent 199 de la première roue 106, ce glissement se produisant jusqu'à ce que cette dent d'entraînement passe au-delà de la surface inclinée et que sa surface radiale se retrouve, comme montré sur la figure 18e , en regard de la surface radiale de la dent 199.

A la fin de ce cycle, montré sur la figure 18e , les première et seconde parties 102, 103 du support ont repris leur position d'origine de la figure 18a et seule la première roue dentée 106 n'a pas sa position d'origine puisqu'elle a tourné de la valeur d'un pas de ses dents donc d'une dent, cette rotation permettant ainsi de compter chaque passage de véhicule sur la chaussée et à la droite de la droite CD.

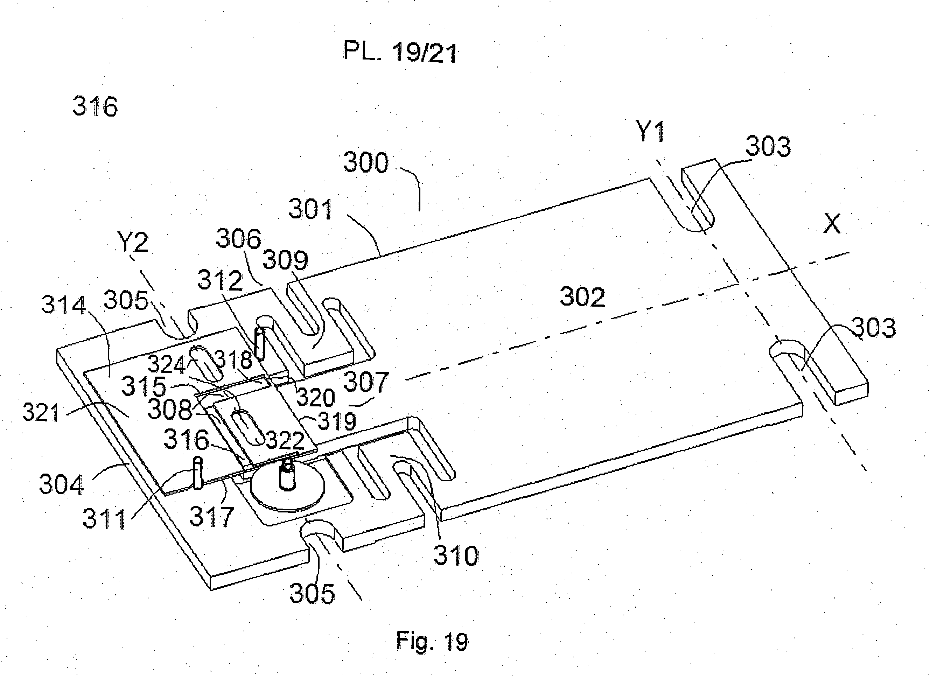

La figure 19 présente un exemple de réalisation d'un capteur destiné à être positionné sur la surface latérale du parapet d'un pont et apte à détecter et à compter le nombre de cycle de déformations du parapet d'un pont se traduisant par un cycle de variation de distance (éloignement puis rapprochement ou l'inverse) entre deux points A et B du parapet disposés préférentiellement horizontalement et à une distance inférieure à 3 cm l'un de l'autre, les variations de distance pouvant par exemple être comprise entre 15 et 100µm. Ce capteur 300 comporte un premier support 301 réalisé dans le même matériau que celui du parapet du pont, à savoir en aluminium, cette caractéristique permettant d'annuler l'effet des dilatations thermiques entre le parapet et le capteur. Ce support comporte une première partie 302 comportant des premières encoches transversales 303 d'axe Y1 perpendiculaire à son axe longitudinal X , une seconde partie 304 en forme de U comportant des secondes encoches transversales 305 d'axe Y2 perpendiculaire à l'axe longitudinal X, et une troisième partie 306 comportant d'une part une partie intermédiaire 307 solidaire de la première partie et séparée de la seconde partie par une gorge en U 308 et se poursuivant à l'intérieur de la forme en U de la seconde partie et d'autre part deux parties 309, 310 en forme de U disposés transversalement selon un axe Y3 perpendiculaire à l'axe longitudinal X du support 301. La fonction des deux parties 309, 310 en forme de U est de maintenir le positionnement de la première partie par rapport à la seconde partie avant et pendant la fixation du capteur sur la structure d'accueil à savoir le parapet du pont. Lorsque les première et seconde parties du support 301 sont fixées sur la structure d'accueil, même un endommagement des deux parties en U voir même leur suppression, n'empêche pas le fonctionnement du capteur.

Les première et seconde encoches sont destinées à recevoir de la colle afin de fixer le support 301 sur la structure d'accueil et d'obtenir ainsi des zones fixes de faible largeur et situées à des endroits prédéterminés et permettant un fonctionnement optimal du capteur.

Deux plots cylindriques 311, 312 sont chacun fixés dans un alésage pratiqué dans la deuxième partie du support. Leur fonction est de guider le positionnement d'une plaque 314, réalisée ici en silicium et de forme carrée. Cette plaque comporte une ouverture 315 en forme de L dont l'une de ses extrémités 316 débouche vers le milieu d'un premier côté 317 du carré tandis que son autre extrémité 318 se trouve au niveau du milieu d'un second côté 319 du carré adjacent audit premier côté 317 mais sans déboucher sur ce second côté de sorte qu'une fine largeur de matière 320 subsiste à ce niveau. Ainsi, cette plaque est constituée par une première et une seconde partie, respectivement 321 et 322, seconde partie dont la largeur est sensiblement égale à celle de la partie intermédiaire 307 de la troisième partie 306 et destinée à être fixée sur cette dernière.

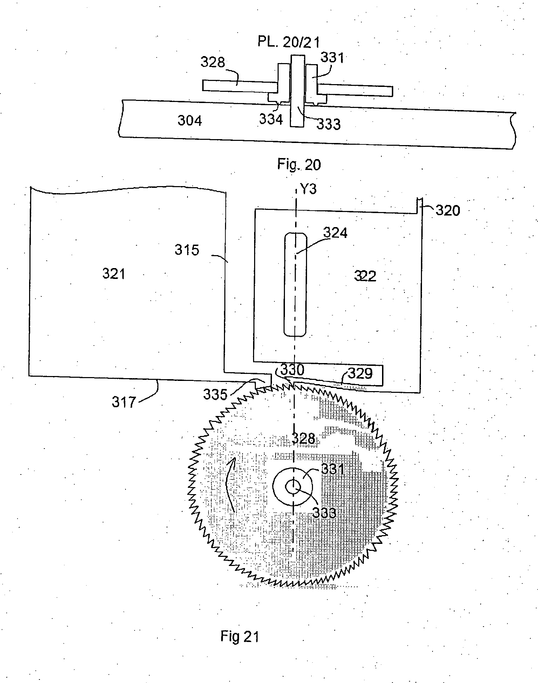

Chacune des première et seconde parties 321, 322 de la plaque comporte une ouverture 324 de forme oblongue disposée d'axe transversale confondu avec l'axe Y2 de fixation de la deuxième partie 304 du support 301 selon ledit axe Y2 comme montré sur la figure 21 . Ces ouvertures sont destinées à recevoir de la colle afin de fixer la plaque 314 sur le support 301, et plus précisément la à fixer la partie première 321 de la plaque 314 sur la deuxième partie 304 du support 301 et la seconde partie 322 de la plaque 314 sur ladite partie intermédiaire 307 qui est solidaire de la première partie 302 du support 301, et d'obtenir ainsi des zones de fixation de faible largeur et situées à des endroits prédéterminés. Ainsi, lorsque la plaque 314 est positionnée puis collée sur le support 301, l'ouverture 315 en forme de L se trouve au dessus de ladite gorge en U 308 séparant ladite partie intermédiaire 307 de la seconde partie 304 du support 301. La partie 320 est détruite une fois la pièce 314 collée sur le support 301. Elle sert juste au maintien en position avant et pendant la phase de collage.

Comme montré sur la figure 20 qui présente les moyens de détection et de comptage selon cette variante de réalisation de l'invention, une poutre d'entraînement 329, qui comporte une dent 330 à sa première extrémité, a sa seconde extrémité qui est solidaire de la deuxième partie 322 de la plaque 314 au niveau dudit premier côté 317 du carré. Elle s'étend parallèlement au côté de cette deuxième partie 322 situé du côté dudit premier côté 317.

Comme montré sur la figure 21 qui présente les moyens de comptage selon cette variante de réalisation de l'invention, une roue dentée de comptage 328, semblable à celle de la figure 10 , est montée sur un palier 331 de forme tubulaire et comportant un épaulement 332 sur lequel repose la roue dentée 328, ce palier 331 étant apte à tourner autour d'un axe de rotation 333 solidaire de la deuxième partie du support 301 et de sorte que la roue dentée 328 forme, avec la dent 330 de la poutre d'entraînement 329, un engrenage tandis que l'utilisation d'un patin de frottement complémentaire 335 permet d'obtenir un ensemble formant un cliquet, comme expliqué par exemple dans le cadre de la figure 4 . Le palier 331 comporte des excroissances 334 sur sa base aptes à limiter les frottements avec le support 304 lors de ses rotations. D'une manière préférentielle, en position de repos, la dent 330 de la poutre d'entraînement 329 est en appui contre la roue dentée 328 et, ainsi, mise en précontrainte. Un tel capteur étant destiné à détecter et compter des déformations de la structure selon la direction X, la mise en précontrainte de la poutre d'entraînement 329 permet de compenser des déformations de la structure selon la direction Y2.

Avec un tel capteur, une déformation de la structure d'accueil dans la direction X produit une déformation similaire du support du capteur donc un éloignement (ou un rapprochement) des axes Y1 et Y2. Cet éloignement (ou ce rapprochement) produit un déplacement relatif de la première partie du support par rapport à la seconde partie et donc un déplacement de la dent 330 de la poutre d'entraînement 329 solidaire de la première partie 302 du support 301 par rapport à la roue dentée 328, ce déplacement produisant un entraînement de la roue dentée 328 dans le sens indiqué par la flèche. Lors du retour de la structure d'accueil dans sa position initiale, du fait de la présence du patin 335 et des formes des dents de la poutre d'entraînement 329 et de la roue dentée 328, la dent 330 de la poutre d'entraînement 329 escamote celle de la roue dentée, cette dernière restant ainsi dans la position prise à l'issue de la rotation dans le sens de la flèche, d'où l'analogie avec un cliquet.

Dans le cas où le matériau du support serait différent de celui de la structure d'accueil, la compensation de la température peut être effectuée en adaptant la longueur de la première partie du support et/ou de ladite partie intermédiaire de sorte que le produit de la distance séparant les deux axes de collage Y1 ,Y2 du capteur sur la structure d'accueil par le coefficient de dilatation du matériau constitutif de la structure d'accueil soit égal au produit de la distance séparant ledit axe Y1 de collage à la dent de la poutre d'entraînement par le coefficient de dilatation thermique du support du capteur.

Par ailleurs, en plaçant plusieurs capteurs identiques à des hauteurs différentes de la surface latérale du parapet, il est possible de discriminer les types de véhicule passant sur le pont en fonction de leur masse. A titre d'exemple, un premier capteur positionné le plus bas pourra compter le passage de tous les véhicules dont la masse est supérieure à 500kg, un second capteur placé dans une position intermédiaire pourra compter le passage de tous les véhicules de plus de 3 tonnes et un troisième capteur situé encore plus haut ne comptera le passage que des véhicules de plus de 10 tonnes.

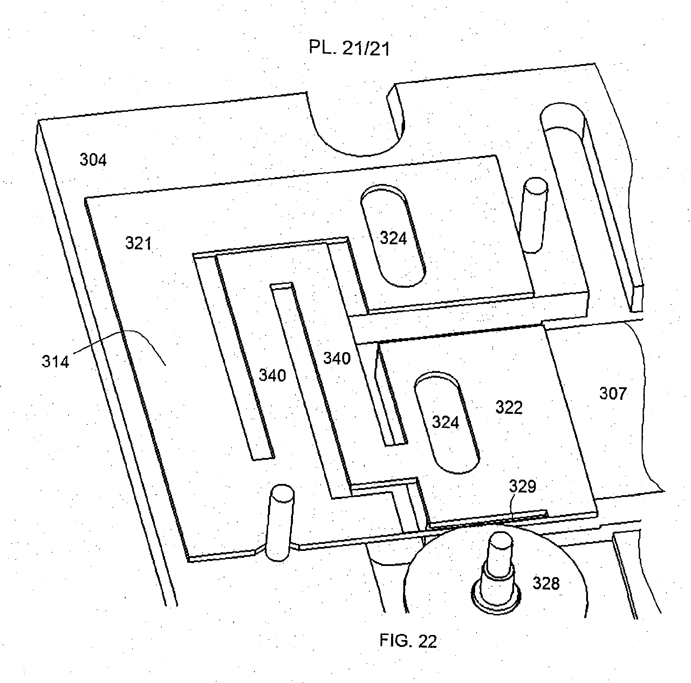

La figure 22 montre une seconde variante de réalisation de la plaque 314 dans laquelle les première et seconde parties 321, 322 sont solidarisées par un élément intermédiaire élastique 340 en forme de U, ladite fine largeur de matière 320 ayant aussi été supprimée. Cet élément intermédiaire 340 permet d'une part de maintenir le positionnement des dites première et seconde parties 321, 322 avant et pendant leur collage sur les parties respectives 304 et 307 tandis que son élasticité permet un déplacement relatif des dites première et seconde parties 321, 322 lorsque la structure sur laquelle est fixé le capteur est soumise à une sollicitation produisant une variation de distance entre les points A et B du capteur, ce déplacement produisant une rotation de la roue de comptage via la poutre d'entraînement 329.

Les modes de réalisation précédemment décrits présentent, par rapport à l'état de la technique, de nombreux avantages. Ainsi, le microcapteur est totalement passif, et c'est l'événement lui-même (action d'un objet apte à fléchir une structure) qui fourni l'énergie nécessaire à l'activation des fonctions de détection et de comptage.

Dans le cas présent, le microcapteur est mis en service pour une durée qui n'est pas limitée par la durée de vie de la source d'énergie. Compte tenu de la nature même des matériaux utilisés, en l'occurrence du silicium, l'espérance de vie du capteur est dans tous les cas très supérieure à celle de tous les systèmes d'arme y compris pour des systèmes passifs stockés pour de très longues périodes.

Dans le cas présent, le caractère inerte du compteur permet d'envisager de l'appliquer sur un système fonctionnant en sécurité pyrotechnique, ce qui procure une avancée considérable par rapport aux capacités actuelles. De plus, un microcapteur selon l'invention est totalement insensible aux champs électromagnétiques.

En outre, la solution proposée est très simple à mettre en oeuvre et son fonctionnement très fiable. Il est indépendant d'une source d'énergie, discret, et d'un coût unitaire faible.

Par ailleurs, lorsque les moyens de comptage comporte plusieurs poutres aptes à entraîner, successivement, la roue dentée selon une même direction, ces poutres peuvent être disposées du même côté de la roue dentée comme sur la figure 6 ou, par exemple, en partie d'un côté et en partie de l'autre sans que le fonctionnement du dispositif n'en soit changé. De plus les dents des dites poutres peuvent être placées à la même distance les unes des autres ou à des distances différentes tout en respectant la formule de l'écartement E donnée dans la description.

En outre, la dent de la poutre anti-retour telle que montré sur la figure 10 peut être remplacée par un patin de frottement apte à appliquer une force de frottement sur la roue dentée de comptage. Son rôle est double. Dans les deux cas, c'est la force de frottement du patin sur la roue qui lui permet de jouer son rôle. Cette force de frottement est déterminée par la précontrainte de la poutre patin. Il limite d'une part une rotation excessive due à des effets inertiels de la roue de comptage dans le sens normal de rotation. Il empêche d'autre part une rotation de la roue de comptage dans le sens inverse du sens normal lors du retour de la dent d'entraînement, pour peu que la force de frottement du patin soit supérieure à celle de la poutre d'entraînement sur la roue.

Par ailleurs, dans le cas où l'on souhaite compenser les différences de dilatations thermiques entre le capteur et la structure, il est, d'une part, préférable de réaliser les supports du capteur en une matière dont le coefficient de dilatation thermique est proche de celui du matériau de la structure, et, d'autre part, de compenser géométriquement, via la forme des dites première et seconde partie du support et le positionnement de la roue de comptage, cette dilatation thermique.

## Revendications

1. Capteur passif et réversible de déformations selon une direction OX d'une structure (15) extérieure au capteur notamment lors de cycles de températures ou de contraintes mécaniques subis par cette structure, **caractérisé en ce que** le capteur comporte des moyens de détection et de comptage des cycles de variations de distance entre deux points ou zones d'une structure, ces moyens comportant :
- un support (S ;101) possédant une première et une seconde parties (2, 3 ; 102, 103) possédant chacune une zone d'ancrage (5, 6), ces zones d'ancrage étant aptes à être fixées respectivement à l'une et à l'autre desdits deux points ou zones de la structure (15) et étant constituées par des plots (5, 6), des encoches et/ou des alésages (224, 225) et étant de dimensions plus faibles que celles des première et seconde parties, les moyens de comptage étant associés à chacune des dites première et seconde parties du support.
- des moyens mécaniques de détection et de comptage possédant au moins une première roue dentée (11 ; 106) disposée sur la première partie (2) du support (S) et au moins une poutre d'entrainement solidaire (20 ; 107), à l'une de ses extrémités, à la seconde partie (3 ; 103) dudit support et comportant à son autre extrémité, au moins une dent (21 ; 110) apte à s'engrener sur ladite première roue dentée (11),
- un dispositif anti-retour (12 ; 113) associé à ladite première roue dentée,
les première et seconde parties (2, 3) du support étant reliées entre-elles par au moins un élément élastique (4), le dispositif anti-retour (113) associé à ladite première roue dentée (106), comportant une poutre solidaire (175), à l'une de ses extrémités, à la première partie (102) du support (101) et comportant, à son autre extrémité, au moins une dent (139) apte à s'engrener sur celles de ladite première roue dentée (106), cette dent ainsi que celle (110) de la poutre d'entrainement et celles (112) de la première roue dentée (106) comportant chacune une surface disposée selon un rayon de cette roue dentée (106) et une surface inclinée par rapport à ce rayon.

2. Capteur selon la revendication 1, **caractérisé en ce que** ce capteur est un microcapteur.

3. Capteur selon la revendication 1, **caractérisé en ce que** le support (101) est en forme de U.

4. Capteur selon la revendication 3, **caractérisé en ce qu'**il comporte un support (101), principalement en forme de U comportant ainsi une première partie (102) et une deuxième partie (103) reliées par une troisième partie (104) constituant la base du U, et **en ce que** le rapprochement des première et seconde parties du support produit un entraînement de la première roue dentée par la dent de la poutre d'entraînement (107) tandis que l'éloignement de ces deux parties produit un maintien de la première roue dentée (106) par le dispositif anti-retour (113) et un escamotage de la dent de la poutre d'entraînement (107) sur une dent de la première roue dentée (106).

5. Capteur selon la revendication 3, **caractérisé en ce que** tous ses éléments sont réalisés en silicium.

## Patentansprüche

1. Passiver und reversibler Sensor von Verformungen gemäß einer Richtung OX einer Struktur (15) außerhalb des Sensors, insbesondere bei Temperatur- oder mechanischen Beanspruchungszyklen, welche diese Struktur erfährt, **dadurch gekennzeichnet, dass** der Sensor Detektions- und Zählmittel der Abstandsveränderungszyklen zwischen zwei Punkten oder Zonen einer Struktur aufweist, wobei diese Mittel aufweisen:
- einen Träger (S; 101), der einen ersten und einen zweiten Teil (2, 3; 102, 103) besitzt, die jeweils eine Verankerungszone (5, 6) besitzen, wobei diese Verankerungszonen imstande sind, jeweils an dem einen und an dem anderen der zwei Punkte oder Zonen der Struktur (15) befestigt zu sein und von Zapfen (5, 6), Kerben und/oder Bohrungen (224, 225) gebildet sind und kleinere Abmessungen haben als die des ersten und zweiten Teils, wobei jedem von dem ersten und zweiten Teil des Trägers Zählmittel zugeordnet sind,
- mechanische Detektions- und Zählmittel, die mindestens ein erstes Zahnrad (11; 106) besitzen, das auf dem ersten Teil (2) des Trägers (S) angeordnet ist, und mindestens einen Antriebsbalken (20; 107), der an dem einen seiner Enden mit dem zweiten Teil (3; 103) des Trägers fest verbunden ist und an seinem anderen Ende mindestens einen Zahn (21; 110) aufweist, der imstande ist, in das erste Zahnrad (11) einzugreifen,
- eine Rückkehrsperrvorrichtung (12; 113), die dem ersten Zahnrad zugeordnet ist,
wobei der erste und zweite Teil (2, 3) des Trägers untereinander durch mindestens ein elastisches Element (4) verbunden sind, wobei die Rückkehrsperrvorrichtung (113), die dem ersten Zahnrad (106) zugeordnet ist, einen Balken (175) aufweist, der an dem einen seiner Enden mit dem ersten Teil (102) des Trägers (101) fest verbunden ist und an seinem anderen Ende mindestens einen Zahn (139) aufweist, der imstande ist, in die des ersten Zahnrads (106) einzugreifen, wobei dieser Zahn sowie der (110) des Antriebsbalkens und die (112) des ersten Zahnrads (106) jeweils eine Fläche aufweisen, die gemäß einem Radius dieses Zahnrads (106) angeordnet ist, und eine in Bezug auf diesen Radius geneigte Fläche.

2. Sensor nach Anspruch 1, **dadurch gekennzeichnet, dass** dieser Sensor ein Mikrosensor ist.

3. Sensor nach Anspruch 1, **dadurch gekennzeichnet, dass** der Träger (101) U-förmig ist.

4. Sensor nach Anspruch 3, **dadurch gekennzeichnet, dass** er einen hauptsächlich U-förmigen Träger (101) aufweist, der somit einen ersten Teil (102) und einen zweiten Teil (103) aufweist, die durch einen dritten Teil (104) verbunden sind, welcher die Basis des U bildet, und dass die Annäherung des ersten und zweiten Teils des Trägers einen Antrieb des ersten Zahnrads durch den Zahn des Antriebsbalkens (107) bewirkt, wogegen die Beabstandung dieser zwei Teile ein Halten des ersten Zahnrads (106) durch die Rückkehrsperrvorrichtung (113) und ein Verrasten des Zahns des Antriebsbalkens (107) auf einem Zahn des ersten Zahnrads (106) bewirkt.

5. Sensor nach Anspruch 3, **dadurch gekennzeichnet, dass** alle seine Elemente aus Silizium hergestellt sind.

## Claims

1. A passive and reversible sensor for deformations, along an OX direction, of a structure (15) outside the sensor, such as during cycles of temperatures or mechanical stresses experienced by this structure, **characterised in that** the sensor comprises means for detecting and counting the cycles of variations in the distance between two points or regions of a structure, these means comprising:
- a carrier (S; 101) having first and second parts (2, 3; 102, 103) each provided with an anchoring region (5, 6), these anchoring regions being able to be respectively fixed to either of said two points or regions of the structure (15) and being constituted by studs (5, 6), notches and/or bores (224, 225) and being of sizes smaller than those of the first and second parts, the counting means being associated with each of said first and second parts of the carrier,
- mechanical detecting and counting means having at least one first toothed wheel (11; 106) arranged on the first part (2) of the carrier (S) and at least one driving beam (20; 107) integral, at one of its ends, with the second part (3; 103) of said carrier and comprising, at its other end, at least one tooth (21; 110) able to mesh with said first toothed wheel (11),
- a non-return device (12; 113) associated with said first toothed wheel,
the first and second parts (2, 3) of the carrier being connected to each other by at least one elastic member (4), the non-return device (113) associated with said first toothed wheel (106) comprising a beam (175) that is integral, at one of its ends, with the first part (102) of the carrier (101) and comprises, at its other end, at least one tooth (139) able to mesh with those of said first toothed wheel (106), this tooth as well as that (110) of the driving beam and those (112) of the first toothed wheel (106) each comprising a surface arranged on a radius of this toothed wheel (106) and a surface angled with respect to this radius.

2. The sensor according to claim 1, **characterised in that** this sensor is a microsensor.

3. The sensor according to claim 1, **characterised in that** the carrier (101) is U-shaped.

4. The sensor according to claim 3, **characterised in that** it comprises a carrier (101) that is mainly U-shaped, thus provided with a first part (102) and a second part (103) connected by a third part (104) constituting the base of the U, and **in that** bringing the first and second parts of the carrier closer causes the first toothed wheel to be driven by the tooth of the driving beam (107) while moving these two parts away causes the first toothed wheel (106) to be held by the non-return device (113) and the tooth of the driving beam (107) to be retracted on a tooth of the first toothed wheel (106).

5. The sensor according to claim 3, **characterised in that** all the members thereof are made of silicon.
